# FASCICULE DE BREVET EUROPEEN

(11) **EP 1 585 238 B1**
(45) Date de publication et mention de la délivrance du brevet: **25.02.2009**
(21) Numéro de dépôt: 05290702.9
(22) Date de dépôt: 30.03.2005
(51) Int. Cl.: H04B 10/18, G02B 6/34

(54) **Module optique de compensation de dispersion chromatique et procédé correspondant**
Optisches Modul zur Kompensation der chromatischen Dispersion und entsprechendes Verfahren
Optical module for chromatic dispersion compensation and corresponding method

(30) Priorité: 06.04.2004 FR 0450681
(43) Date de publication de la demande: 12.10.2005
(73) Titulaire: Alcatel Lucent, 75008 Paris (FR)
(72) Inventeur: Guerin, Jean-Jacques, 92160 Antony (FR); Durand, Olivier, 91700 Ste Genevieve des Bois (FR); Poussiere, Fabrice, 91300 Massy (FR)
(74) Mandataire: Korakis-Ménager, Sophie

(56) Documents cités:
- EP-A- 1 271 199
- SONG Y W ET AL: "TUNABLE WDM DISPERSION COMPENSATION WITH FIXED BANDWIDTH AND FIXED PASSBAND CENTER WAVELENGTH USING A UNIFORM FBG" IEEE PHOTONICS TECHNOLOGY LETTERS, IEEE INC. NEW YORK, US, vol. 14, no. 8, août 2002 (2002-08), pages 1193-1195, XP001132245 ISSN: 1041-1135
- GARTHE D ET AL: "Adjustable dispersion equaliser for 10 and 20 Gbit/s over distances up to 160 km" ELECTRONICS LETTERS, IEE STEVENAGE, GB, vol. 30, no. 25, 8 décembre 1994 (1994-12-08), pages 2159-2160, XP006001444 ISSN: 0013-5194

## Description

La présente invention concerne le domaine des télécommunications à haut débit sur fibre optique. Plus spécifiquement, l'invention s'applique à un module comportant un filtre à réseau de Bragg adapté pour compenser les effets de dispersion chromatique et/ou de pente de dispersion chromatique dans une liaison par fibre optique.

La dispersion chromatique se manifeste lors de la propagation d'impulsions de courte durée sur une grande distance par une dispersion progressive des vitesses de groupe de l'impulsion au cours de la propagation.

Dans les réseaux de transmission à hauts débits et multiplexés en longueur d'onde, dit WDM pour Wavelength Division Multiplexing, il est avantageux de gérer la dispersion chromatique, notamment pour des débits supérieurs ou égaux à 40Gbit/s ou à 160Gbit/s ; mais également lors d'opérations d'augmentation de débits des liaisons existantes tel que le passage d'une transmission de 2.5 Gbit/s à 10 Gbit/s par exemple. L'objectif est d'obtenir, pour toutes les valeurs de longueur d'onde multiplexées, une dispersion chromatique cumulée sensiblement nulle sur la liaison, de sorte à limiter l'élargissement des impulsions. Selon la technique du WDM, une source de lumière à large bande est couplée à des moyens de séparation de longueurs d'onde discrètes et plusieurs canaux émettent ainsi simultanément un signal à une longueur d'onde donnée dans la fibre optique de liaison. Les effets de la dispersion chromatique sont donc dupliqués pour chaque longueur d'onde émise sur chaque canal.

Les effets de la dispersion chromatique sont cumulés sur la longueur de la liaison, et sont de ce fait plus importants pour les liaisons longues. En outre, la dispersion chromatique provoque un élargissement temporel des impulsions à véhiculer sur la liaison (pente de la dispersion chromatique). Ainsi, si les impulsions sont suffisamment espacées dans le temps, le risque d'erreur à la réception est minimisé, en revanche, dans le cas de systèmes à haut débit, l'élargissement temporel d'une impulsion peut devenir du même ordre que l'espacement entre les impulsions, entraînant ainsi un taux d'erreur inacceptable pour l'opérateur de la liaison. Par exemple, vers 1.55 µm, l'ordre de grandeur de l'élargissement temporel d'une impulsion est de 17 ps/nm/km. Cette déformation résulte du fait que vers 1.55µm, les composantes « haute fréquence » du spectre de l'impulsion se propagent plus vite que les composantes « basse fréquence », ce qui entraîne une redistribution des composantes spectrales au cours de la propagation. Il est aussi intéressant de limiter la pente de dispersion chromatique cumulée sur la plage du multiplex de sorte à éviter ou limiter les distorsions entre les canaux du multiplex. Cette pente est classiquement la dérivée de la dispersion chromatique par rapport à la longueur d'onde.

On utilise classiquement comme fibre de ligne pour les systèmes de transmission à fibres optiques des fibres à saut d'indice, appelées aussi fibres SMF (acronyme de l'anglais "Single Mode Fiber"), ou des fibres à dispersion décalée non nulle, appelées aussi fibres NZ-DSF+ (acronyme de l'anglais "Non-Zero Dispersion Shifted Fiber"). Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Ces fibres de compensation de dispersion connues présentent au voisinage d'une longueur d'onde de 1550 nm une dispersion chromatique négative et une pente de la dispersion chromatique négative.

Cependant, les fibres DCF réalisent une compensation globale de la dispersion chromatique qui ne tient pas compte des différences qui peuvent apparaître en bout de liaison optique entre les différents canaux du multiplex. De plus ces fibres DCF apportent des pertes supplémentaires à la ligne de transmission, et pour les liaisons longues distances, cette augmentation d'atténuation peut requérir d'ajouter des amplificateurs supplémentaires. Une compensation monocanal est alors requise, qui nécessite l'insertion de portions de DCF spécifiques pour chaque canal afin d'ajuster la dispersion chromatique résiduelle, typiquement de l'ordre de +/- 1000 ps/nm.

Or, les fibres DCF sont efficaces pour une compensation en ligne, mais sont chères pour être utilisées pour compenser la dispersion chromatique résiduelle d'une longueur d'onde. Cela requiert d'avoir des modules de compensation ayant de quelques centaines de mètres à quelques kilomètres de fibres DCF. De plus, la compensation ainsi opérée n'est pas ajustable sauf à changer physiquement le module.

Par ailleurs, il est connu des documents EP 1 278 082 et EP 1 283 433 que les réseaux de Bragg à pas variable (dit « chirpé ») permettent de réaliser une compensation de la dispersion chromatique.

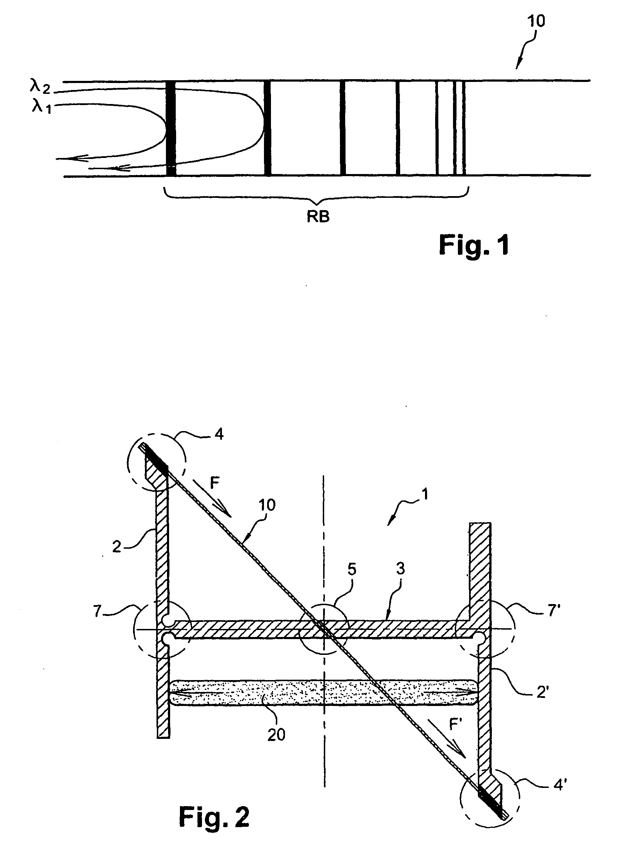

Un schéma de principe du fonctionnement d'un compensateur de dispersion chromatique à l'aide d'un réseau de Bragg à pas variable est illustré sur la figure 1. Classiquement, l'inscription d'un réseau de Bragg RB à pas variable dans une fibre 10 se fait à travers un masque de phase dont le pas varie sur la longueur de la fibre de manière à modifier la longueur d'onde réfléchie par le réseau en fonction de la position sur la fibre. Une variation linéaire du pas du réseau (tel qu'illustré sur la figure 1), et donc de la longueur d'onde de réflexion en fonction de la position sur la fibre, peut être utilisée pour corriger les effets de la dispersion chromatique de premier ordre (classiquement désignée par la dispersion chromatique), et une variation quadratique du pas peut être utilisée pour corriger les effets de la dispersion chromatique de deuxième ordre (classiquement désignée par la pente de la dispersion chromatique). La variation du pas du réseau induit un retard de l'onde réfléchie en fonction de la longueur d'onde, ce qui permet de corriger les effets de la dispersion. Un tel réseau de Bragg est généralement associé à un circulateur optique, car il fonctionne en réflexion.

Parvenir à compenser la dispersion chromatique, du premier et du second ordre, sur une large bande d'émission, c'est à dire sur une pluralité de canaux multiplexés en longueur d'onde, nécessite soit de réaliser une concaténation de réseaux de Bragg qui compensent chacun une partie des effets de la dispersion pour une portion donnée de la bande spectrale, soit de réaliser un très long réseau de Bragg chirpé. Un tel réseau de Bragg de grande longueur est exposé dans la publication de conférence de OFC'01, PD 12, 2001, de J.F. Brennan, E. Hernandez, J.A. Volenti, P.G. Sinha, M.R. Mattthews, D.E. Elder, G.A. Beauchesne, C.H. Byrd : « Dispersion and dispersion-slope correction with a fiber Bragg grating over the full C-band ». On peut citer par exemple, les modules fixes de dispersion chromatique Hilynx© de la société Highwave Optical Technologies qui sont particulièrement adaptés aux liaisons optiques à 10 Gbit/s.

Un autre problème auquel sont soumis les opérateurs de liaisons optiques est l'évolution de la dispersion chromatique au cours du temps, due par exemple aux variations climatiques ou au vieillissement de la liaison optique.

Une telle évolution nécessite une adaptation au niveau du réseau de transmission et en particulier au niveau des compensateurs de dispersion utilisés. Cette adaptation peut être effectuée lors de la compensation de dispersion chromatique en ligne, typiquement dans des répéteurs optiques, ou lors de la compensation de dispersion chromatique résiduelle, en fin de ligne de transmission.

Une liaison optique est typiquement composée d'une pluralité de tronçons de fibre optique que relie une pluralité de stations ou répéteurs dans lesquels les signaux optiques à propager sont amplifiés et remis en forme avant d'être transmis au tronçon suivant. Il est classique de prévoir des compensateurs de dispersion chromatique dans au moins certains répéteurs espacés régulièrement dans la liaison. Or, il n'est pas envisageable de changer les compensateurs de dispersion lorsqu'il y a une modification climatique ou lorsque la liaison optique et les éléments qui la composent vieillissent.

Ainsi, il a déjà été proposé dans l'art antérieur des compensateurs de dispersion ajustables, c'est à dire dont les caractéristiques peuvent être modifiées à distance pour permettre l'usage du même dispositif de compensation pour des longueurs d'onde variables.

On sait déjà qu'une action mécanique et/ou thermique sur une portion de fibre optique modifie les propriétés du réseau photo inscrit sur cette portion. En particulier, le pas du réseau peut varier sous l'influence d'une action mécanique ou thermique.

On peut citer par exemple le compensateur de dispersion chromatique ajustable ClearSpectrum™ de la société Phaethon ou le compensateur TH-TDC de la société Teraxion. Ces compensateurs sont ajustables par effet thermique. Un gradient thermique impose une variation du pas du réseau inscrit et modifie ainsi les voleurs de longueurs d'onde réfléchies.

Cependant, l'utilisation d'un gradient thermique nécessite l'utilisation d'éléments Peltier qui sont fortement consommateurs d'énergie.

La présente invention propose de réaliser un module optique de compensation de dispersion chromatique accordable pour chaque canal d'un réseau dense multiplexé en longueur d'onde (DWDM pour Dense Wavelength Division Multiplexing).

Le module de compensation de dispersion chromatique selon l'invention est particulièrement adapté à réaliser une compensation de la dispersion chromatique residuelle et nécessitte une alimentation électrique de trés faible consommation.

A cet effet, l'invention propose de soumettre un réseau de Bragg à pas variable à une action mécanique contrôlée au moyen d'un support adapté afin de modifier le pas du réseau de Bragg et d'ajuster ainsi la compensation de dispersion chromatique.

Plus spécifiquement, l'invention concerne un module optique de compensation de dispersion chromatique comprenant :
- une structure mécanique comprenant deux supports flexibles et un support fixe ;
- une portion de fibre comportant un réseau de Bragg à pas variable, ladite portion de fibre étant fixée aux supports flexibles en deux points de fixation rigides et au support fixe en un point de fixation souple ;
- un actionneur mécanique adapté à agir sur la structure mécanique pour comprimer une première et pour étirer une seconde partie de la portion de fibre à réseau de Bragg, tout en maintenant fixe la partie centrale de la portion de fibre à réseau de Bragg.

Selon l'invention, les extrémités de ladite portion de fibre à réseau de Bragg sont fixées aux supports flexibles et une partie centrale de ladite portion de fibre à réseau de Bragg est fixée au support fixe.

Selon une caractéristique, la fixation souple est adaptée à compenser les efforts exercés sur la partie centrale du réseau de Bragg fixée au support fixe.

Selon une autre caractéristique, la structure mécanique comporte au moins deux points de flexion permettant une déformation de ladite structure par l'actionneur mécanique.

Selon un mode de réalisation, la structure mécanique présente la forme d'un H, le support fixe constituant la barre centrale du H et les supports flexibles constituant les deux barres verticales du H.

Selon un mode de mise en ouvre, l'actionneur est disposé parallèle à la barre centrale du H et agit sur les branches verticales du H.

Selon un mode de réalisation, l'actionneur mécanique est un actionneur piézo-électrique.

Selon une caractéristique, la première partie de portion de fibre à réseau de Bragg pouvant être comprimée est la partie du réseau à long pas et la seconde partie de portion de fibre à réseau de Bragg pouvant être étirée est la partie du réseau à petit pas.

L'invention concerne également un procédé de compensation de dispersion chromatique comprenant les étapes consistant à :
- placer au moins un module de compensation de dispersion chromatique selon l'invention sur une ligne de transmission à multiplexage en longueur d'onde (WDM) ;
- mesurer une dispersion chromatique;
- commander l'actionneur mécanique de manière à ajuster la compensation de ladite dispersion chromatique.

Selon les modes de réalisation, l'actionneur mécanique est actionné manuellement ou automatiquement.

L'invention concerne en outre un système de transmission optique par multiplexage en longueur d'onde comportant :
- une ligne de transmission à multiplexage en longueur d'onde (WDM) ;
- des moyens de mesure de la dispersion chromatique ;
- au moins un module de compensation de dispersion chromatique selon l'invention, adapté à ajuster la compensation de ladite dispersion chromatique mesurée.

Selon une application, les moyens de mesure de la dispersion chromatique sont adaptés à mesurer une dispersion chromatique résiduelle pour chaque longueur d'onde transmise.

Selon une application, les moyens de mesure de la dispersion chromatique sont adaptés à mesurer un décalage de dispersion chromatique en cours de transmission pour une longueur d'onde donnée.

Les particularités et avantages de l'invention ressortiront plus clairement à la lecture de la description qui suit, faite à titre d'exemple illustratif et non limitatif, en référence aux figures annexées dans lesquelles :
- la figure 1, déjà décrite, est un schéma de principe du fonctionnement d'un compensateur de dispersion chromatique à l'aide d'un réseau de Bragg à pas variable fonctionnant en réflexion;
- la figure 2 est un schéma d'un module optique selon l'invention.

Selon l'invention, un module optique de compensation de dispersion chromatique comprend une portion de fibre comportant un réseau de Bragg à pas variable et une structure mécanique comprenant deux supports flexibles et un support fixe. La portion de fibre est fixée à ladite structure mécanique en trois points : un premier point de fixation souple est relié au support fixe et deux points de fixation rigides sont reliés aux supports flexibles de la structure mécanique. Le module comprend également un actionneur mécanique adapté à agir sur la structure mécanique pour comprimer une première portion du réseau de Bragg et pour étirer une seconde portion du réseau de Bragg tout en maintenant la partie centrale du réseau fixe. La valeur de dispersion chromatique induite par le filtre à réseau de Bragg est ainsi modifiée alors que sa longueur d'onde centrale reste fixe.

On se réfère maintenant à la figure 2 pour une description plus détaillée du module selon l'invention.

Le module comporte une structure mécanique 1 comprenant deux supports flexibles 2, 2' et un support fixe 3. Dans le mode de réalisation illustré, la structure 1 présente la forme générale d'un H. Le support fixe 3 constitue la barre centrale du H et les supports flexibles 2, 2' constituent chacun une barre latérale verticale du H.

Les deux supports flexibles 2 et 2' ainsi que le support fixe 3 constituent de préférence une structure unique et monobloc. Le matériau de la structure mécanique 1 peut être de l'invar ou tout autre matériau dont le coefficient d'expansion thermique est faible.

Le module comporte également une portion de fibre 10 comportant un réseau de Bragg à pas variable, dit filtre de Bragg « chirpé ». Le réseau de Bragg peut présenter une variation linéaire du pas ou une variation quadratique du pas selon les applications envisagées. Une telle portion de fibre comportant un réseau de Bragg photo inscrit est désignée par la suite comme un filtre de Bragg.

Le filtre de Bragg 10 est fixé à la structure mécanique 1 au moyen de trois points de fixation 4, 4' et 5. La partie centrale du filtre à réseau de Bragg est fixée au support fixe 3 de la structure 1 par un point de fixation souple 5. Les extrémités du filtre à réseau de Bragg 10 sont respectivement fixées aux deux supports flexibles 2, 2' de la structure 1 par des points de fixation rigides 4, 4'.

Les points de fixations rigides 4, 4' peuvent être obtenus par exemple par de la colle ou un scellement verre métal. Il est en effet connu de maintenir un filtre de Bragg sur une structure mécanique au moyen d'une colle adaptée déposée directement sur la fibre optique. On peut se référer sur ce point à la publication « Tunable WDM Dispersion Compensation with Fixed Bandwidth and Fixed Passband Center Wavelength using a uniform FBG », de Y. W. Song, D. Starodubov, Z. Pan, Y. Xie, A.E. Willner et J. Feinberg, IEEE Photonics Technology Letters, vol. 14, n°8, 2002.

Le point de fixation souple 5 peut être obtenu par une colle souple ayant un module d'élasticité adapté. Ce point de fixation souple 5 doit en effet être adapté à compenser tout effort exercé sur la partie centrale du réseau de Bragg fixée au support fixe 3. Ce point de fixation souple 5 permet la traction et la compression du filtre dans la zone centrale et permet ainsi d'éviter une déformation de la partie centrale du filtre de Bragg. Par ailleurs, le point de fixation souple 5 est tel qu'il ne modifie pas les propriétés optiques du filtre de Bragg 10.

Le module comprend également un actionneur mécanique 20 adapté à déformer la structure mécanique 1. L'actionneur mécanique 20 peut être une vis à pas différentiel ou un actionneur piézo-électrique.

Dans le mode de réalisation illustré, deux points de flexion 7, 7' sont prévus aux points de rattachement de la barre centrale du H aux barres verticales du H. Ces points de flexion 7, 7' sont adaptés à assurer une rotation des barres verticales du H autour d'axes passant par la barre centrale et perpendiculaires à cette barre. Les points de flexion 7, 7' restent solidaires par rapport à la structure mécanique 1. Les points de flexion 7, 7' peuvent être constitués par des articulations ou par un usinage approprié de la structure mécanique 1 permettant une déformation élastique de ladite structure.

Selon le mode de réalisation illustré, l'actionneur 20 est placé parallèle à la barre centrale du H de la structure mécanique 1 et agit sur les branches verticales du H. L'actionneur va donc écarter les branches du H l'une de l'autre d'un même côté de la barre centrale. Cela aura pour effet de faire basculer un premier support flexible 2 vers l'intérieur du H alors que le deuxième support flexible 2' bascule vers l'extérieur du H.

Il en résulte que sous l'action de l'actionneur 20, des forces F et F' sont exercées par les deux supports rigides 2, 2' sur le filtre de Bragg 10. Ces forces F et F' induites par l'actionneur mécanique 20 entraîne une compression d'une première portion du filtre de Bragg et un étirement d'une seconde portion du filtre de Bragg tout en maintenant la partie centrale du filtre fixe.

En effet, les supports flexibles 2, 2' restent solidaires de la structure mécanique 1 déformée par l'actionneur 20 alors que le support rigide 3 ne subit aucune déformation. Les points de fixation rigides 4, 4' entraînent les extrémités du filtre 10 solidairement avec la déformation des supports flexible 2, 2', alors que le point de fixation souple 5 absorbe les forces exercées sur la portion centrale du filtre fixée au support fixe 3.

Le filtre de Bragg 10 est initialement monté en tension dans la structure mécanique 1. Ainsi, la compression d'une portion du filtre de Bragg est réalisée par un relâchement de la contrainte initiale. On obtient ainsi une déformation du filtre sans discontinuité.

Typiquement, l'actionneur mécanique 20 peut induire une force telle que la compression et l'étirement sont de l'ordre de + 0.5 % et de - 0.5 % de la longueur du filtre de Bragg 10.

Pour une application à une compensation de dispersion chromatique, la partie du filtre de Bragg comprimée est la partie à long pas du « chirp » et la partie étirée du filtre de Bragg est la partie à petit pas du « chirp ». Pour un filtre de 50 mm de long présentant un réseau de Bragg à pas variable avec un « chirp » de l'ordre 0.6 nm, une modification relative de +0.1 % et de -0.1 % peut induire une modification de la dispersion chromatique de l'ordre de +1000 ps/nm et de -1000 ps/nm tout en gardant la longueur d'onde centrale de Bragg fixe.

De plus, un contrôle précis de la valeur de dispersion peut être apporté au moyen de l'actionneur. Par exemple, l'actionneur mécanique 20 peut être une vis à pas différentiel qui assure une résolution de l'ajustement de la dispersion de l'ordre de 25 ps/nm. L'actionneur mécanique 20 peut être un actionneur piézoélectrique commandé manuellement ou automatiquement selon les applications. Même dans le cas d'un ajustement automatique, la consommation énergétique de l'actionneur est minime par rapport à un élément Peltier.

Le module selon l'invention est utilisé avec des moyens de mesure de la dispersion chromatique qui permettent de transmettre un signal de commande à l'actionneur afin d'ajuster la compensation de dispersion en fonction de cette mesure.

On obtient donc un module optique parfaitement adapté à assurer une compensation ajustable de la dispersion chromatique résiduelle sur ligne de transmission de type DWDM. Un tel module est également adapté à assurer un ajustement de la dispersion chromatique en cours de transmission pour une longueur d'onde donnée.

Bien que l'invention ait été décrite en référence à un mode de réalisation particulier, montrant une structure mécanique en forme de H, il est entendu que toute autre forme adaptée permettant de comprimer une première portion de fibre et d'étirer une deuxième portion de fibre en maintenant la partie centrale du filtre hors contrainte mécanique est couverte par la présente invention.

## Revendications

1. Module optique de compensation de dispersion chromatique comprenant :
- une structure mécanique (1) comprenant deux supports flexibles (2, 2') et un support fixe (3) ;
- une portion de fibre (10) comportant un réseau de Bragg à pas variable, les extrémités de ladite portion de fibre à réseau de Bragg (10) étant fixées aux supports flexibles (2, 2') en deux points de fixation rigides (4, 4') et une partie centrale de ladite portion de fibre à réseau de Bragg étant fixée au support fixe (3) en un point de fixation souple (5);
- un actionneur mécanique (20) adapté à agir sur la structure mécanique (1) pour comprimer une première partie et pour étirer une seconde partie de la portion de fibre à réseau de Bragg, tout en maintenant fixe la partie centrale de la portion de fibre à réseau de Bragg.

2. Module selon la revendication 1, **caractérisée en ce que** la fixation souple (5) est adaptée à compenser les efforts exercés sur la partie centrale du réseau de Bragg fixée au support fixe (3).

3. Module selon l'une des revendications 1 et 2, **caractérisé en ce que** la structure mécanique (1) comporte au moins deux points de flexion (7, 7') permettant une déformation de ladite structure par l'actionneur mécanique (20).

4. Module selon l'une des revendications 1 à 3, **caractérisé en ce que** la structure mécanique (1) présente la forme d'un H, le support fixe (3) constituant la barre centrale du H et les supports flexibles (2, 2') constituant les deux barres verticales du H.

5. Module selon la revendication 4, **caractérisé en ce que** l'actionneur (20) est disposé parallèle à la barre centrale du H et agit sur les branches verticales du H.

6. Module selon l'une des revendications 1 à 5, **caractérisé en ce que** l'actionneur mécanique (20) est un actionneur piézo-électrique.

7. Module selon l'une des revendications 1 à 6, **caractérisé en ce que** la première partie de portion de fibre à réseau de Bragg pouvant être comprimée est la partie du réseau à long pas et la seconde partie de portion de fibre à réseau de Bragg pouvant être étirée est la partie du réseau à petit pas.

8. Procédé de compensation de dispersion chromatique comprenant les étapes consistant à :
- placer au moins un module de compensation de dispersion chromatique selon l'une des revendications 1 à 7 sur une ligne de transmission multiplexage en longueur d'onde (WDM);
- mesurer une dispersion chromatique ;
- commander l'actionneur mécanique de manière à ajuster la compensation de ladite dispersion chromatique.

9. Procédé selon la revendication 8, **caractérisé en ce que** l'actionneur mécanique est actionné manuellement.

10. Procédé selon la revendication 8, **caractérisé en ce que** l'actionneur mécanique est actionné automatiquement.

11. système de transmission optique par multiplexage en longueur d'onde comportant:
- une ligne de transmission à multiplexage en longueur d'onde (WDM);
- des moyens de mesure de la dispersion chromatique ;
- au moins un module de compensation de dispersion chromatique selon l'une des revendications 1 à 7, adapté à ajuster la compensation de ladite dispersion chromatique mesurée.

12. Système selon la revendication 11 **caractérisé en ce que** les moyens de mesure de la dispersion chromatique sont adaptés à mesurer une dispersion chromatique résiduelle pour chaque longueur d'onde transmise.

13. Système selon la revendication 11, **caractérisé en ce que** les moyens de mesure de la dispersion chromatique sont adaptés à mesurer un décalage de dispersion chromatique en cours de transmission pour une longueur d'onde donnée

## Claims

1. An optical chromatic dispersion-compensating module comprising
- a mechanical structure (1) comprising two flexible mounts (2, 2') and a fixed mount (3);
- a length of fiber (10) comprising a variable-pitch Bragg Grating, the ends of said length of Fiber Bragg Grating (10) being fastened onto flexible mounts (2, 2') at two rigid fastening points (4, 4') and a central part of said length of Fiber Bragg Grating being fastened onto the fixed mount (3) at a flexible fastening point (5);
- a mechanical actuator (20) adapted to act on the mechanical structure (1) in order to compress a first part and in order to stretch a second part of the length of Fiber Bragg Grating, while keeping the central part of the length of Fiber Bragg Grating fixed.

2. A module according to claim 1, **characterized in that** the flexible fastening (5) is adapted to compensate for the force exerted upon the central part of the Fiber Bragg Grating fastened to the fixed medium (3).

3. A module according to claims 1 and 2, **characterized in that** the mechanical structure (1) comprises at least two bending points (7, 7') allowing the mechanical actuator to warp said structure (20).

4. A module according to one of claims 1 to 3, **characterized in that** the mechanical structure (1) is H-shaped, with the fixed mount (3) constituting the central bar of the H and the flexible mounts (2, 2') constituting the two vertical bars of the H.

5. A nodule according to claim 4, **characterized in that** the actuator (20) is disposed parallel to the central bar of the H and acts on the vertical branches of the H.

6. A module according to one of claims 1 to 5, **characterized in that** the mechanical actuator (20) is a piezoelectric actuator.

7. A module according to one of claims 1 to 6, **characterized in that** the compressible first part of the length of Fiber Bragg Grating is the long -threaded part of the grating and the stretchable second part of the Fiber Bragg Grating is the short-threaded part of the grating.

8. A chromatic dispersion-compensating method comprising steps consisting in:
- placing at least one chromatic dispersion-compensating module in accordance with one of claims 1 to 7 any wavelength division multiplexing (WDM) transmission line;
- measuring a chromatic dispersion;
- controlling the mechanical actuator in such a way as to adjust the compensation for said chromatic dispersion.

9. A method according to claim 8, **characterized in that** the mechanical actuator is manually actuated.

10. A method according to claim 8, **characterized in that** the mechanical actuator is automatically actuated.

11. An wavelength division multiplexing optical transmission system, comprising:
- a wavelength-division multiplexing (WDM) transmission line;
- chromatic dispersion measurement means;
- at least one chromatic dispersion-compensating module according to one of claims 1 to 7, adapted to adjust the compensation of said measured chromatic dispersion.

12. A system according to claim 11, **characterized in that** the chromatic dispersion measurement means are adapted to measure a shift in residual chromatic dispersion for each wavelength transmitted.

13. A system according to claim 11, **characterized in that** the chromatic dispersion measurement means are adapted to measure a shift in chromatic dispersion during transmission for a given wavelength.

## Patentansprüche

1. Optisches Modul zur Kompensation der chromatischen Dispersion, umfassend;
- Eine mechanische Struktur (1) mit zwei flexiblen Trägern (2, 2') und einem festen Träger (3);
- einen Faserabschnitt (10), welcher ein Bragg-Gitter mit variabler Schrittweite enthält, wobei die Enden des besagten Faserabschnitts (10), welcher das Bragg-Gitter enthält, an den flexiblen Trägern (2, 2') an zwei starren Befestigungspunkten (4, 4') befestigt sind und ein mittlerer Teil des besagten Faserabschnitts, welcher das Bragg-Gitter enthält, an einem flexiblen Befestigungspunkt (5) am festen Träger (3) befestigt ist;
- ein mechanisches Stellglied (20), welches fähig ist, auf die mechanische Struktur (1) einzuwirken, um einen ersten Teil des Faserabschnitts, welcher das Bragg-Gitter enthält, zu komprimieren und eignen zweiten Teil zu dehnen, wobei der mittlere Teil des welcher das Bragg-Gitter enthält, festgehalten wird.

2. Modul nach Anspruch 1, **dadurch gekennzeichnet, dass** die flexible Befestigung (5) fähig ist, die auf den am festen Träger (3) befestigten mittleren Teil des Bragg-gitters ausgeübten Beanspruchungen zu kompensieren,

3. Modul nach einem der Ansprüche 1 und 2, **dadurch gekennzeichnet, dass** die mechanische Struktur (1) mindestens zwei Biegepunkte (7, 7') umfasst, welche eine Verformung der besagten Struktur durch das mechanische Stellglied (20) ermöglichen.

4. Modul nach einem der Ansprüche 1 bis 3, **dadurch gekennzeichnet, dass** die mechanische Struktur (1) die Form eines H aufweist, wobei der feste Träger (3) den waagerechten Balken des H und die flexiblen Träger (2, 2') die beiden senkrechten Balken des H darstellen.

5. Modul nach Anspruch 4, **dadurch gekennzeichnet, dass** das Stellglied (20) parallel zum waagerechten Balken des H angeordnet ist und auf die senkrechten Balken des H einwirkt.

6. Modul nach einem der Ansprüche 1 bis 5, **dadurch gekennzeichnet, dass** das mechanische Stellglied (20) ein piezoelektrisches Stellglied ist.

7. Modul nach einem der Ansprüche 1 bis 6, **dadurch gekennzeichnet, dass** der erste Teil des Faserabschnitts, welcher das Bragg-Gitter enthält und komprimiert werden kann, der Teil des Gitters mit langer Schrittweite ist, und der zweite Teil des Faserabschnitts welcher das Bragg-Gitter enthält und gedehnt werden kann, der Teil des Gitters mit kleiner Schrittweite ist.

8. Verfahren zur Kompensation der chromatischen Dispersion, welches die folgenden Schritte umfasst, die darin bestehen:
- Mindestens ein Modul zur Kompensation der chromatischen Dispersion nach einem der Ansprüche 1 bis 7 auf einer Wellenlägenmultiplex-Übertragunsleitung (WDM) anzubringen;
- eine chromatische Dispersion zu messen;
- das mechanische Stellglied zu steuern, um die Kompensation der besagten chromatischen Dispersion zu justieren.

9. Verfahren nach Anspruch 8, **dadurch gekennzeichnet, dass** das mechanische Stellglied manuell betätigt wird.

10. Verfahren nach Anspruch 8, **dadurch gekennzeichnet, dass** das mechanisch Stellglied automatisch betätigt wird.

11. System zur optischen Wellenlängenmultiplex-Übertrangung, umfassend:
- Eine Wellenlängenmultiplex-Übertragungsleitung (WDM);
- Mittel zum Messen der chromatischen Dispersion;
- mindestens ein Modul zur Kompensation der chromatischen Dispersion nach einem der Ansprüche 1 bis 7, welches fähig ist, die Kompensation der besagten gemessenen chromatischen Dispersion zu justieren.

12. System nach Anspruch 11, **dadurch gekennzeichnet, dass** die Mittel zum Messen der chromatischen Dispersion fähig sind, für jede Übertragene Wellenlänge eine chromatische Restdispersion zu messen.

13. System nach Anspruch 11, **dadurch gekennzeichnet, dass** die Mittel zum Messen der chromatischen Dispersion fähig sind, für eine gegebene Wellenlänge während der Übertragung eine Verschiebung der chromatischen Dispersion zu messen.
